# EUROPÄISCHE PATENTANMELDUNG

(11) **EP 3 404 842 A1**
(43) Veröffentlichungstag der Anmeldung: **21.11.2018**
(21) Anmeldenummer: 17000827.0
(22) Anmeldetag: 15.05.2017
(51) Int. Cl.: H04B 7/02, H04B 7/185

(54) **INTERNET FÜR DEN FLUGVERKEHR**

(71) Anmelder: Herbst, Martin, 5090 Lofer (AT)
(72) Erfinder: Herbst, Martin, 5090 Lofer (AT)

(57) **Zusammenfassung**

Die xfly Technologie dient zu einer störungsfreien Echtzeit-Kommunikation in Luftfahrzeugen und bietet somit einen wichtigen Service für alle Airlines und Flugreisenden an. Das System beinhaltet die komplette Funktionsweise für den Einsatz. Endnutzer können das System mit allen gängigen WLAN Geräten im Flugzeuginneren störungsfrei nutzen.

Durch entsprechenden Einsatz von Hardware kann das System für viele weitere datenintensive Statistiken, Forschungen und Dienstleistungen zwischen Flugzeug und Erde dienen.

## Beschreibung

Die Erfindung dient dazu, dass Flugzeuge mit Telefonie und Breitbandinternet störungsfrei mittels Nutzung freier Frequenzen im 3, 6 und 10 GHz Bereich durch Anbringung von leistungsfähigen Beamforming-Antennen (in einem Abstand von jeweils 50 km angebracht), Beamforming-Antennen am Flugzeug (auf der Flugzeugaußenhaut je nach Modell) und Übertragungsprotokollen (damit Übertragungsstrecken bis ca. 150 km beachtet werden und das gegenseitige Stören im gleichen Frequenzbereich sowie der Echoeffekt vermieden wird), versorgt werden.

Die Reichweite der Antennen beträgt 150 km. Es handelt sich bei den Antennen um sogenannte Beamforming- Antennen, die sowohl am Boden bei einer Basisstation (Glasfaserkabeln=Lichtwellenleiter LWL) als auch am Flugzeug (Flugzeugaußenhaut) angebracht wird.

Die Antennen selbst bestehen aus einer Fläche von circa 50 x 50, welche infolge der hintereinander geschalteten Dipole und in Folge der elektronischen Ansteuerung das Ein- und Ausschalten der Dipole in die Hauptstrahlrichtung im Winkel von 125° verändern können. Dies geschieht ohne mechanischen Einfluss, sondern durch Ein- und Ausschalten beziehungsweise elektronische Steuerung der Antennenelemente.

Die Antennen arbeiten zusätzlich nach dem MuMiMo extended Input und Outputprinzip. Nach dieser Technik ist es möglich, zeitlich horizontal und vertikal die Signale zu empfangen und zu senden. Die Antennen sind erstmals beweglich und den Luftfahrzeugen angepasst und werden je nachdem durch Einbauwinkel inklusive Rundungen in der Grundmatrix jeweils programmiert.

In einem Verfahren in Verbindung mit High Speed Open Flow Protokoll übermitteln 64 Streamingkanäle gleichzeitig die benötigten Daten. Jedes Flugzeug kann außerdem mit bis zu 16 Bodenstationen gleichzeitig Kontakt aufnehmen.

Weiters kommt ein übergeordnetes Traffic-Visualsystem zur Anwendung bei dem die Kameras (hochauflösend und Infrarot) in den Antennen der Flugzeuge montiert werden.
Die Basisstationen sind vorrangig bei Flughäfen angebunden beziehungsweise montiert. Dient zur Anwendungen für Internet, Telefonie und ein IP-TV, Datensysteme und GPS / Galileo / GLONASS / BeiDou usw. übergeordnetes Visualsystem inklusive GPS, Galileo, GLONASS und BeiDou.

Hauptanwendung ist die Versorgung der Luftfahrzeuge mit Echtzeitdaten beziehungsweise der Austausch von Echtzeitdaten. Im Flugzeug können alle Personen Internet, Telefonie und Datendienste gleich wie am Boden nutzen mit einer Datenübertragung mit mindestens 100 Mbit/s, derzeit bis zu 2,8 Gbit/s steigend. Ein weiteres Anwendungsgebiet ist die Flugdatenübermittlung und zusätzliche Position- und Geschwindigkeitsbestimmung. Im Inneren befindet sich eine WLAN-Antenne in ihrem 2,4 und 5 GHz Bereich zur Nutzung aller mit 0,1 W - max. 1 W Sendeleistung sowie ein GSM-Sendestation.

Das Anwendungsgebiet ist für Wirtschaft, Forschung, Verkehr, Umwelt und Tourismus von großer Bedeutung.

Neben der Funktion als Breitbandinternetversorgung und Telefonie dient die Erfindung auch zur Verkehrsüberwachung, zur Erstellung von Wetter-Emissions und Umweltdaten. Es kann weiters durch xfly eine zentrale Gesundheitsdatenbank erstellt werden, welche nahezu eine lückenlose Aufzeichnung der Pollenwerte und Luftgütermenge in verschiedenen Schichten ermöglicht. Durch Google lässt sich nämlich eine präzise Aussage von Luft- und Umweltqualität für Mensch und Tier errechnen. Ebenfalls kann damit eine optimale Bewirtschaftung von Agrarflächen sowie deren Einfluss auf CO² Gehalt erstellt werden.
Die Erfindung ist seit 2008 in Entwicklung und wird ständig technisch weiterentwickelt.

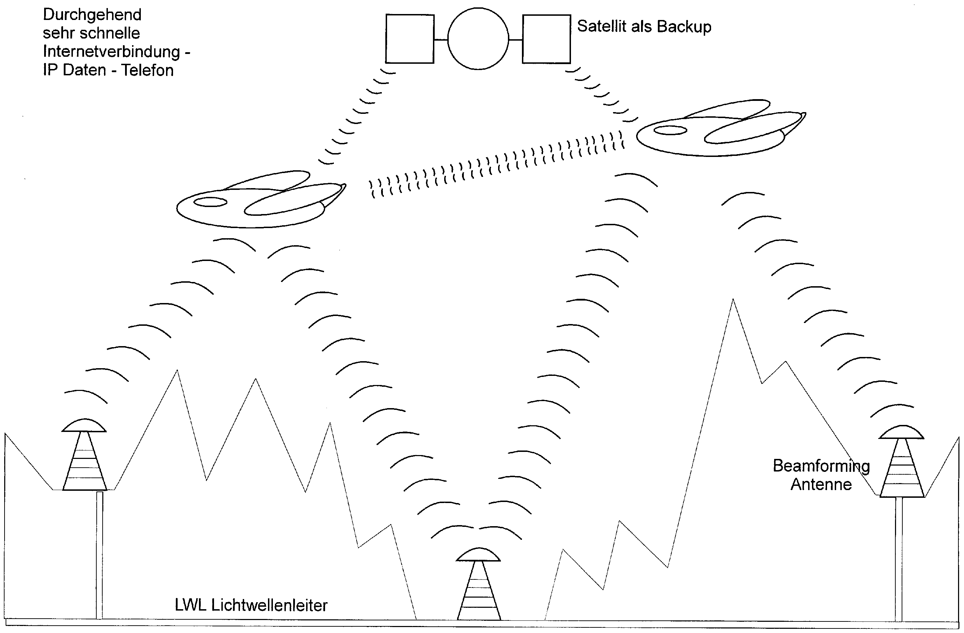

## Patentansprüche

1. Drahtlose Versorgung von Flugzeugen mit Telefonie und Breitbandinternet mittels Nutzung freier Frequenzen, das sind Frequenzen, die von jedermann mit und ohne Registrierung verwendet werden können, im 3 GHz, 6 GHz und 10 GHz Bereich;

2. Verkehrsüberwachung, zur Erstellung von Wetter-Emissions und Umweltdaten, Erstellung einer zentralen Gesundheitsdatenbank, für eine lückenlose Aufzeichnung der Pollenwerte, Luftgütermenge und radioaktiver Strahlung in verschiedenen Schichten und optimale Bewirtschaftung von Agrarflächen sowie deren Einfluss auf CO² Gehalt.

3. Erfindung laut Anspruch 1, wobei am Boden Beamforming-Antennen verwendet werden und die Anbindung durch Glasfaserkabel / Lichtwellenleiter (LWL) erfolgt;

4. Erfindung laut Anspruch 1, wobei am Flugzeug (Flugzeugaußenhaut oder dahinter, je nach Modell) Beamforming-Antennen verwendet werden; die Antennen am Flugzeug sind beweglich und den Luftfahrzeugen angepasst und werden je nachdem durch Einbauwinkel inklusive Rundungen in der Grundmatrix jeweils programmiert.

5. Erfindung laut Anspruch 1, wobei die Antennen am Boden und am Flugzeug nach dem MuMiMo extended Input und Outputprinzip arbeiten, zeitlich horizontal und vertikal die Signale zu empfangen und zu senden.

6. Erfindung laut Anspruch 1, wobei mit speziellen Übertragungs- und Fehlerkorrekturprotokollen Übertragungsstrecken bis ca. 150 km erreicht werden und das gegenseitige Stören im gleichen Frequenzbereich sowie der Echoeffekt (Feeding) vermieden wird.

7. Erfindung laut Anspruch 1, wobei ein übergeordnetes Traffic-Visualsystem zur Anwendung kommt, bei dem sich die Kamera (hochauflösend und Infrarot) in den Antenne der Flugzeuge montiert werden.
